Europäisches Patentamt

European Patent Office

Office européen des brevets

(11) Publication number: **0 253 307**
**A1**

# EUROPEAN PATENT APPLICATION

(21) Application number: 87109904.0

(22) Date of filing: 09.07.87

(51) Int. Cl.⁴ **F26B 3/04 , A23L 3/40**

(30) Priority: 16.07.86 IT 4158386

(43) Date of publication of application:
**20.01.88 Bulletin 88/03**

(84) Designated Contracting States:
**AT BE CH DE ES FR GB GR LI LU NL SE**

(71) Applicant: **Pavan, Mario**
**Via Monte Grappa, 30**
**I-35015 Galliera Veneta Padova(IT)**

(72) Inventor: **Pavan, Mario**
**Via Monte Grappa, 30**
**I-35015 Galliera Veneta Padova(IT)**

(74) Representative: **Modiano, Guido et al**
**MODIANO & ASSOCIATI S.A.S. Via Meravigli, 16**
**I-20123 Milan(IT)**

(54) **Process and apparatus for desiccating food products such as pasta.**

(57) Process and apparatus for desiccating food products such as pasta characterized in that it comprises one or more steps of rapid desiccation with high surface evaporation followed by one or more steps with atomization of water on the product and on its surrounding environment. This allows to humidify the surface layer of the product and facilitate a homogeneous redistribution of water in its interior.

Fig. 3

EP 0 253 307 A1

# PROCESS AND APPARATUS FOR DESICCATING FOOD PRODUCTS SUCH AS PASTA

The present invention relates to a process and apparatus for the rapid desiccation at high temperature of food products such as pasta.

The desiccation process for pasta and similar products obviously arises from the need to reduce the high concentration of water present in the product at the end of its formation, until it reaches values suitable to allow the necessary preservability of the product.

Indeed it must be noted that inside pasta which is about to undergo the desiccation process there is a water content which is due both to free water, uniformly distributed inside the cross section between the interstitial spaces and which can be removed easily therefrom, and to water weakly bonded to the structural matrix of the product, which is released more slowly, as well as to bond water which, actively intervening in the structure of the pasta, could be removed only with very drastic treatments which can destroy the bonds between said water and the matrix.

In the desiccation processes most commonly in use, there is always and in any case a transfer of heat which facilitates the evaporation of water from the outer surface of the pasta, consequently generating an internal humidity gradient as well as a phenomenon of diffusion of water from the interior of the cross section towards the outside which tends to re-balance and uniform the concentration of water in the various regions and thus conveys more water towards the outer surface.

Such known types of evaporation processes, taking into account the above mentioned phenomena, can thus operate fundamentally according to two methods.

A first method consists of supplying to the product a sufficient amount of heat to cause the slow evaporation of the surface water, thus allowing the inner humidity to reach, in the meantime, the outer regions before they are fully desiccated; that is to say, desiccation is performed progressively, keeping the evaporation rate lower, or at the most equal, than the maximum rate of diffusion of the water by virtue of the humidity gradient.

A second method consists instead of alternating periods of intense evaporation, which generate high humidity gradients, with so-called "recovery" periods during which the water redistributes uniformly within the cross section of the product.

It is therefore easy to deduce that in both of the cases described above such known types of treatment have the disadvantage of entailing long desiccation times and, therefore, of requiring plants of considerable size, as well as considerable economic burdens.

In order to reduce the time required for the final desiccation of the product, new desiccation processes have been devised also in recent times, their main characteristic residing in the fact that they operate at very high temperatures, in the range of 100°C, eliminating the steps of "recovery" of the product, being able to use for the entire duration of the process the greater plasticity offered by the product at such high temperatures.

Though advantageous from the point of view of the duration of the treatment, even these new desiccation processes are not, however, free from disadvantages.

In particular there is a high risk that, due to the sudden evaporation of the surface layer which does not give enough time for the internal humidity to diffuse, an "impermeable crust" or, more precisely, a dried and hardened surface layer, may form, preventing any subsequent evaporation of the matrix, thus producing an inhomogeneous product.

Moreover, due to these internal inhomogeneities, even high inner tensions can arise in the structure, causing the formation on the product of crackings which, besides reducing its commercial qualities, make it subject to breakage during cooking.

The aim of the present invention is to eliminate the disadvantages described above in known drying processes, providing improvements in said processes which, by virtue of their peculiar characteristics, allow to further reduce the desiccation times of pasta, operating with high-temperature steps, yet obtaining a final product which is practically homogeneous and has optimum commercial and cooking-resistance characteristics, having no risk of crackings at the end of the desiccation.

Within the scope of the above described aim, a particular object of the invention is to devise a process which allows to restore a regular evaporation through surface areas which have desiccated too rapidly, repermeabilizing them and reopening micro-capillaries therein, accordingly obtaining a rebalanced evaporation activity.

Another important object is to device a process which can be provided in practice by means of common rapid high-temperature desiccation plants, integrating them with a limited number of devices which are structurally simple and easy to obtain economically.

Not least object is to devise a desiccation process which, by optimizing the overall energy efficiency of the plant, is furthermore advantageous also from an economical point of view.

The above described aim, the objects mentioned and others which will become apparent hereinafter are achieved, according to the invention, by a process for desiccating pasta and similar food products, characterized in that it comprises, after one or more steps of rapid desiccation with high surface evaporation, one or more steps with atomization of water on the product and/or on its surrounding environment, to humidify the surface layer of said product and facilitate a homogeneous redistribution of water in its interior.

Further characteristics and advantages of the invention will become apparent from the description of two examples of embodiment of a process with said improvements, illustrated only by way of non-limitative example in the accompanying drawing, wherein:

Fig. 1 is a schematic lateral view of a desiccation plant for short pasta;

Fig. 2 is a perspective view of a detail of the plant of fig. 1, pointing out the step of atomizing water on the product; and

Fig. 3 is a schematic lateral view of a desiccation plant for long pasta.

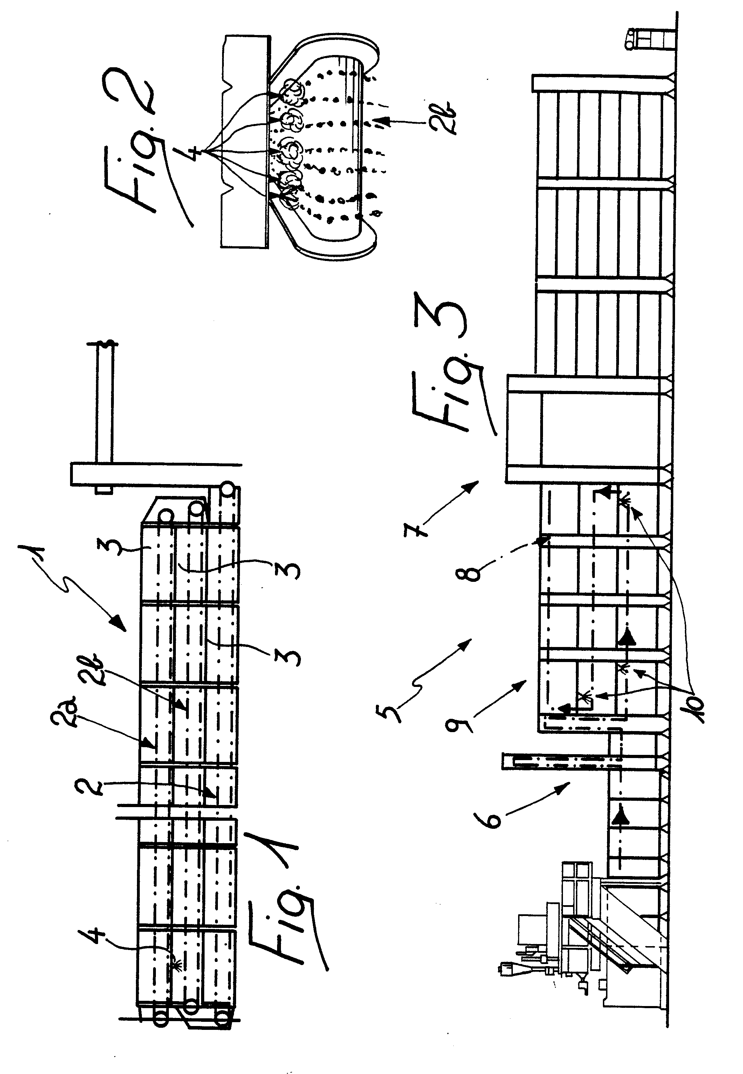

With reference to figs. 1 and 2, the reference numeral 1 indicates a desiccator for short pasta, wherein the pasta to be desiccated is conveyed, by a plurality of superimposed conveyor belts 2, so as to traverse elongated chambers 3, kept heated according to an appropriate temperature diagram, passing, for example by gravity, from one belt to the underlying one.

In order to accelerate the desiccation process, the pasta undergoes, along the initial conveyor belts 2a and 2b, high-temperature conditions, so as to cause it to rapidly evaporate large amounts of water.

According to the invention, in an optimum position along the path, and in particular at the point where the formation of a dry surface layer due to the sudden desiccation would prevent further rapid reductions in humidity, a series of spraying nozzles 4 is provided which, from an appropriate distance, spray a jet of atomized water on the pasta. The atomized water humidifies the surface layer of said pasta and increases the environmental humidity of the surrounding region, so that by slowing down or completely eliminating evaporation for a short time, the rebalancing and the distribution of humidity among the various inner regions of the product, in which the water had reached considerably different concentrations, are facilitated.

Once this homogeneity has been restored and the outer surface of the pasta has been allowed to rapidly release a high amount of water, desiccation continues conveying the pasta along the remaining part of the path.

Naturally, according to the various requirements due to the different forms, thicknesses, etc. of the pasta, the duration and the amount of water atomized in each atomization process is appropriately set, and the atomization step can furthermore possibly repeat more than once along the desiccation process.

With reference now to figure 3, in a desiccation plant for long pasta, generally indicated by the reference numeral 5, the pasta to be dried, conveyed for example by movable horizontal rods, traverses a first section 6 wherein, subject to high temperatures, in a short time it releases a considerable fraction of its water content.

Before entering the final section 7 wherein desiccation ends, the pasta traverses an intermediate chamber 9 wherein it moves along a path with a plurality of superimposed portions, along which it undergoes one or more steps of treatment with atomized water by means of a series of spraying nozzles, arranged for example in the points indicated at 10, with similar effects to those mentioned with regard to the plant described above.

Naturally, due to the different thickness and configuration of long pasta, the process parameters, such as for example traversing times, amount of atomized water, temperature graph along the path, and so on, must be varied accordingly, acting in any case always within the same final scope.

In practice it has thus been observed that by introducing in the desiccation process the steps of surface humidification as described, in the adapted position along the process, it is possible to proceed with more rapid desiccations at high temperature since the temporary formation of impermeable surface layers is subsequently eliminated and therefore does not subsequently block evaporation, or lead to the risk of veining on the pasta at the exit from the process.

It is thus possible to further reduce the desiccation time without compromising the quality of the product, with obvious benefits in economical terms and from the point of view of the productivity of the plant with relation to its dimensions.

The insertion of the atomization steps along the process furthermore allows to intervene directly on the temperature of the treatment area and allows to separate regions with different desiccation conditions.

In fact the water, atomized in a high-temperature environment, vaporizes almost instantly, removing from the environment both the sensible heat required to heat itself up to vaporization temperature and the latent heat for evaporation.

The introduction of atomized water thus has an advantageous consequence in that it allows to considerably reduce, with obvious energy savings, the use of refrigeration batteries which are currently used to lower the environment temperature, this being achieved without the drastic reductions in relative humidity of the environment which were caused by th massive concentration of humidity caused by the high power of the refrigeration batteries which had to be installed before.

The atomization of water on the product also allows the possibility of influencing, in an extremely simple and effective manner, the final water content of the pasta.

It is thus possible, with adequate amounts of atomized water and appropriate treatment times, to obtain a final product with standard commercial characteristics, both for example in the case of possible halts or failures on the production line and also in case of the desiccation of pasta having particular characteristics and dimensions without having to vary accordingly all the settings of the plant.

In practice, the invention thus conceived is susceptible to numerous modifications and variations, all of which are within the scope of the inventive concept, and moreover all the details may be varied according to the particular contingent requirements.

## Claims

1. Process for desiccating food products such as pasta, characterized in that it comprises one or more steps of desiccation of a product with a high surface evaporation followed by one or more steps of atomization of water on said product.

2. Process, according to claim 1, characterized in that said step of atomization is performed at a point of the process when the product has formed a dry surface layer after said step of desiccation.

3. Process, according to the preceding claims, characterized in that said atomization step detemines the final water content of said product by variating its intensity.

4. Apparatus for desiccating food products such as short pasta, comprising a plurality of superimposed conveyor belts (2) carrying said product, characterized in that it comprises one or more sets of spraying nozzles (4) located above said belts and adapted to atomize water on said product carried on said belts.

5. Apparatus, according to claim 4, characterized in that nozzles (4) are arranged, for each set, on a line substantially perpendicular to the direction of movement of said conveyor belts (2).

6. Apparatus, according to claim 4, characterized in that each of said sets of nozzles (4) define a boundary for regions of said apparatus at different temperatures.

7. Apparatus for desiccating food product, such as long pasta, comprising a plurality of rods (8) conveying said product characterized in that it comprises a series of spraying nozzles (10) adapted to atomize water on said product, said nozzles (10) being provided in an intermediate chamber (9) located between a first section (6) and a final section (7) of said apparatus.

Fig. 1

Fig. 2

Fig. 3

0 253 307

European Patent Office

**EUROPEAN SEARCH REPORT**

Application number

EP 87 10 9904

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | BE-A- 672 267 (LUNDGREN) <br> * Figure 1; page 5, lines 5-7 * | 1-3 | F 26 B 3/04 <br> A 23 L 3/40 |
| Y | | 4,5,7 | |
| Y | FR-A-2 368 000 (TOMADINI) <br> * Figure 1 * | 4,5 | |
| Y | US-A-3 258 103 (BONTEMPI et al.) <br> * Figure 5 * | 7 | |
| A | JOURNAL OF THE SCIENCE OF FOOD AND AGRICULTURE, Abstracts, July 1960, page ii-172; P. GÖRLING: "Avoidance of shrinkage cracks in macaroni drying" | | |

TECHNICAL FIELDS SEARCHED (Int Cl.4)

F 26 B
A 23 L

The present search report has been drawn up for all claims

| Place of search | Date of completion of the search | Examiner |
|---|---|---|
| THE HAGUE | 25-09-1987 | DOCKHORN H.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82